# EUROPEAN PATENT APPLICATION

(11) **EP 1 880 911 A1**
(43) Date of publication of application: **23.01.2008**
(21) Application number: 05380075.1
(22) Date of filing: 15.04.2005
(51) Int. Cl.: B60S 9/215

(54) **Improvement of the accessory "easyparking" to cars**

(71) Applicant: Alcaraz Bernaldez, Fernando, 21610 San Juan del Puerto (Huelva) (ES)
(72) Inventor: Alcaraz Bernaldez, Fernando, 21610 San Juan del Puerto (Huelva) (ES)

(57) **Abstract**

The system that we pretend to patent is referred to an improvement that has been patented yet in Spain like model of utility with the number n° 200401197 and with date 20/04/2004 about the invention "Easyparking" to cars, also patented in Spain like model U200202332 with date 30/09/2002. This invention is a mechanism that has the aim of allowing a movement of the vehicle with the combination of a tilting chassis and a raising piston, both united in an articulated way and united with a transversal support to the chassis of the vehicle where there is a wheel that is hanged and actioned by an hydraulic motor, that in normal position is fixed to the chassis and elevated from the floor, but when the device is actioned (it only works when the vehicle is stopped and with the brake of hand working) and actived with a remote control located in the panel of control of the vehicle or actioned from outside, the wheel supports over the roof raising the back of the vehicle and rotating with an hydraulic motor making a transversal movement of it in one and another sense. This system has been improved with the use of an electronic switchboard of four effects that acts over the hydraulic system and that is actived by a remote control that can be situated inside or outside the vehicle. Besides of this, a security system has been included too that with several lightning a acoustics alarms warn the raising of the tilting chassis of its initial position and they avoid that the device is actived putting a switch in the lever of the brake of hand that connect-disconnect the system, avoiding that it is actived when the vehicle is working.

## Description

### PURPOSE OF THE INVENTION

This invention is referred to the improvement made in the invention called "Easyparking". We have adapted different security systems and also a device of "remote control" in order to active the system optionally from inside or from outside of the car.

### ANTECEDENTS OF THE INVENTION

This model consists in several accessories that improve this model in security and in the way of working with regard to the other model of "Easyparking" presented before for the same inventor D. Fernando Alcaraz Bernáldez, registration number U200202332.

Due to the high numbers of cars and the lack of a place to park, overall in the cities, and the fact that this situation provokes a great quantity of lost time to find places to park and the increment of stress that can motivate dangerous manoeuvres; we think that is necessary the use of mechanism that can make easy the manoeuvres of parking of cars. For this reason the 'Easyparking" is a system that put in the cars eliminates the manoeuvres of parking and reduce the necessary space that is necessary to park, making the manoeuvres easier and faster with the possibility of making it from outside of the vehicle.

### DESCRIPTION OF THE INVENTION

The accessory that the invention proposes improves and gives a greater grade of security to the "Easyparking", giving the possibility to action the system from inside or from outside the car. In the same way, two controls of security are applied to the system, acoustic and also lightning, that warns of the voluntary action of the system or of the accidental taking down of the tilting chassis that holds the traversed wheels.

In a more concrete way the improvement consists on:
a) A system composed by emisor-receptor of remote control that with the working of a remote control of four effects, that can be managed from inside or from outside the vehicle, actives an electronic switchboard of four effects that makes work the "Easyparking"
b) A double system of security based on:
   - A switch located in the lever of the brake of hand, that connects and disconnects the "Easyparking" in order to the system only can work when the car is braked and the brake of hand working, avoiding that the system is active when the car is working.
   - A switch located in the hinge of the tilting chassis, in a way, that when the wheel separates from its fit, by working or break down, two holders, one acoustics and other lightning located in the panel of control of the vehicle, begin to work.

### DESCRIPTION OF THE PICTURES

In order to improve the description and to give a better comprehension, we add the following pictures:
**Picture n° 1:** It shows a schematic representation of a car that has "Easyparking". It is necessary in order to be able to understand correctly the reaches of the improvements that we purpose.
**Picture n° 2:** It shows a representation in which we can observe the disposition of the new elements of the improvement.
**Picture n° 3:** It shows the electric circuit necessary to the adaptation of the elements of the improvement.

### LIST OF THE NEW ELEMENTS

**N°20:** It corresponds to a system of blockage of security that consists in a switch located in the lever of brake of hand that connect-disconnect the system of the "Easyparking". In this way, the system only can work when the car is braked and the brake of hand worked, avoiding that the system is active when the car is working.
**N°21:** It consists in a switch located in the lever of the tilting chasing N°5, in a way that when the wheel N°8 separates one cm. from its fit, by working or break down, a system of alarm that consists in two electric warns, one acoustic N°23 and other lightning N°24, begins to work.
**N°22:** It consists in a remote control of four effects located inside of the vehicule in an accessible place in order to be able to use also from the outside of the vehicule, connected to its electronic receptor N°25 that is what actives the system of the mechanism.
**N°23:** It corresponds to a acoustic system of security with a acoustic alarm located inside the vehicule and connected to the switch N°21 of the hinge of tilting chassis that works when the system is actioned or when the tilting chassis N°5 is taken down by a break down.
**N°24:** It corresponds to a lightning alarm of security located in the panel of control of the vehicule and connected to the switch N°21 of the hinge of the tilting chassis that acts when the system is actioned or when the tilting chassis N°5 is taken down by a break down.
**N°25:** It corresponds to a electronic switchboard or to a box of reception with four contacts (or effects); one for the exit of the pin piston N°11, other to pick up it, and the other two to make work the wheel n°8 in one and another sense, connected to the remote control N°22 and to the electric valve N°16 that is what actives the system.

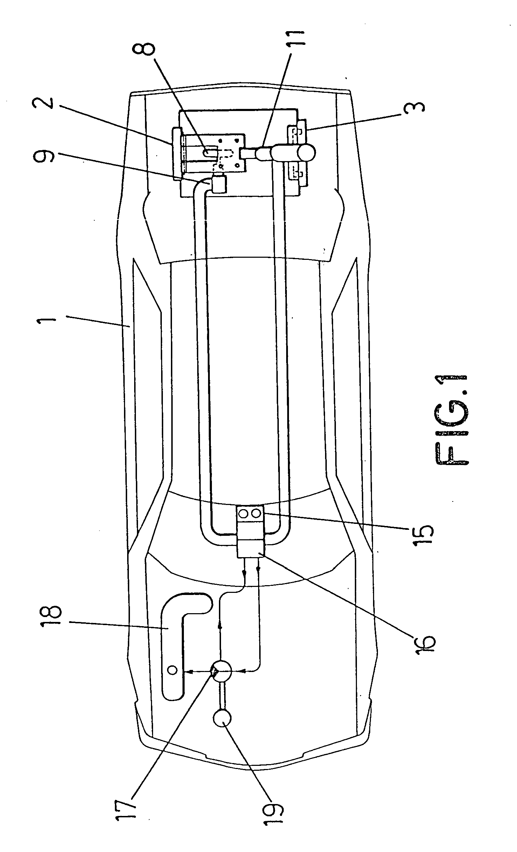

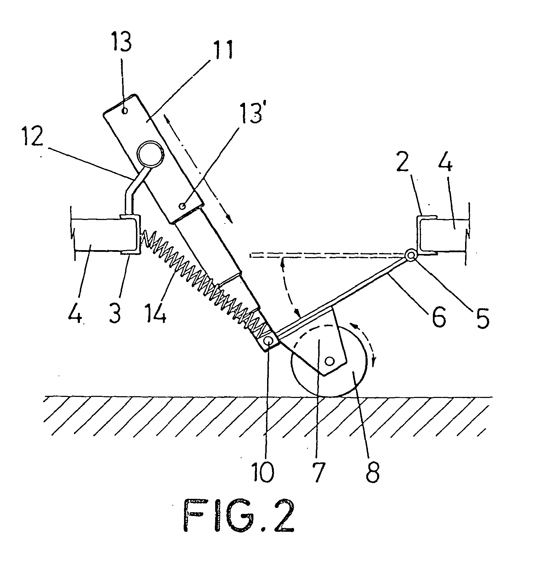

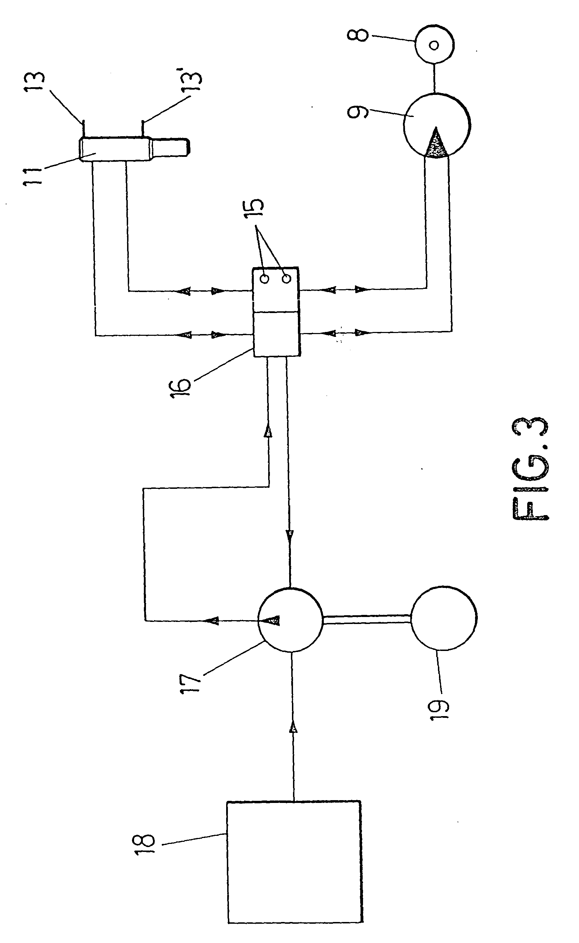

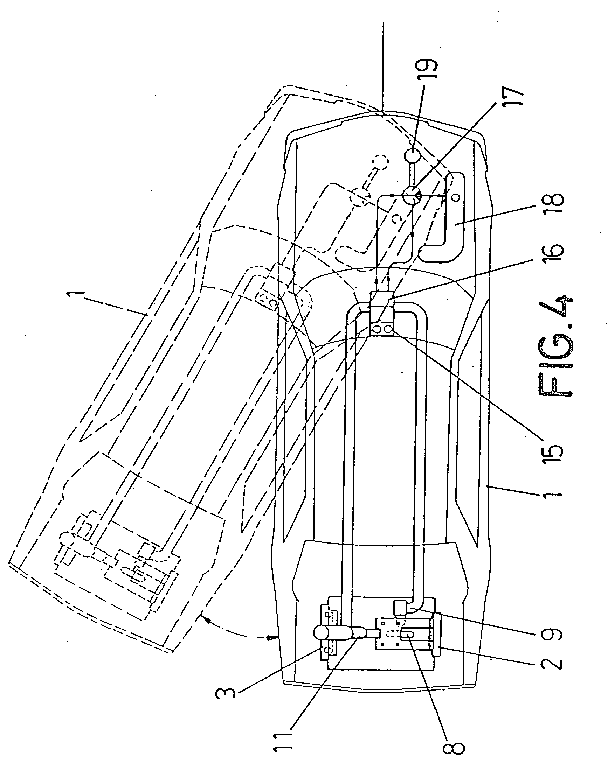

## Claims

1. Improvement of the invention "Easyparking" to cars that is **characterised by** the use of a remote control of four effects that can be used from inside and from outside of the vehicle that is actioned by an emisor-recptor of radio control that actives the electric switchboard of four effects that acts over the hydraulic system of "Easyparking".

2. Improvement of the invention "Easyparking" **characterised by** a security system with a switch located in the lever of the brake of hand that connects-disconnect the system, avoiding that the vehicle is actived when it is working.

3. Improvement of the invention "Easyparking" **characterised by** a switch located in the hinge of the tilting chassis, in a way, that when the wheel separates from its fit, the two holders begin to work.

4. Improvement of the invention "Easyparkin" according to the before recovery, **characterised by** a double warning, acoustic and lightning, located in the panel of control of the vehicle.
